# EUROPEAN PATENT SPECIFICATION

(11) **EP 3 863 281 B1**
(45) Date of publication and mention of the grant of the patent: **24.08.2022**
(21) Application number: 20217370.4
(22) Date of filing: 05.12.2007
(51) Int. Cl.: H04N 5/765, H04N 7/173, H04N 21/433, H04N 21/472, H04N 21/475, H04N 21/482, H04N 21/845

(54) **SYSTEMS AND METHODS FOR SUPPORTING MULTI-USER MEDIA CONTENT ACCESS USING INDEX POINTS**
SYSTEME UND VERFAHREN ZUR UNTERSTÜTZUNG DES INHALTSZUGRIFFS MEHRERER BENUTZER UNTER VERWENDUNG VON INDEXPUNKTEN
SYSTÈMES ET PROCÉDÉS POUR SUPPORTER UN ACCÈS DE CONTENU MULTIMÉDIA À MULTIPLES UTILISATEURS À L'AIDE DE POINTS-INDEX

(30) Priority: 22.12.2006 US 644120
(43) Date of publication of application: 11.08.2021
(62) Divisional of application: 18185915.8
(73) Proprietor: Rovi Guides, Inc., San Jose, CA 95002 (US)
(72) Inventor: CRANER, Michael, Exton, Pennsylvania 19340 (US); DADDARIO, Anthony M., Jr., Conshohocken, Pennsylvania 19428 (US); AARON, Kyle, Philadelphia, Pennsylvania 19144 (US)
(74) Representative: Haley Guiliano International LLP

(56) References cited:
- WO-A-00/05718
- US-A1- 2003 123 853
- US-A1- 2005 166 258

## Description

### Background of the Invention

This invention relates generally to multi-user media systems and, more particularly, to multi-user media systems supporting recorded media assets.

Today's media systems provide viewers with a large array of media content. Broadcast television content, pay-per-view (PPV) content, on-demand content (e.g., video on-demand (VOD) content), and digital music may all be accessed in a viewer's home using suitable user equipment. In addition, recording equipment, such as a digital video recorder (DVR), allows viewers to record various types of the aforementioned content for later access or playback at the user's leisure.

In addition to allowing a user to record media content for playback at a later time, some of today's media systems allow a user to resume watching content where the user last left off. For example, the user equipment may save a reference or index to the user's current viewing position within an asset after the user stops watching the asset. In this way, the user can resume the asset at the correct viewing position at a later time.

Modern in-home media systems, however, may be designed for multi-user access or are multi-room systems including a plurality of user equipment devices. For example, each member of a family may access media content via a single user equipment device or a plurality of networked user equipment devices in a home. The plurality of networked user equipment devices may be connected to a "master" user equipment device or local media server. The master user equipment device or local media server may cache local content and access recorded content on behalf of all the networked user equipment devices.

Accordingly, it would be desirable to provide an index point management system that maintains index points for more than one user and/or across more than one user equipment device so that index points may be accessed and updated at any user equipment device in the media system. It would also be desirable to provide a robust index point management system with an enhanced user interface for creating and managing personal user index points in multi-room or multi-user media systems. The enhanced index point management system may implement a more flexible index point management scheme whereby multiple index points may be maintained for a single content selection or media asset.

US205/0166258 A1 discloses a centralised digital video recording and reproduction system that allows users to not only access the same program or programs from different receivers, but also to pause and resume the same programs from the same marker points established by any system user. US2003/0123858 A1 discloses a graphic user interface (GUI) screen listing a plurality of sets of video content. To update the GUI screen, a thumbnail generating unit chooses a plurality of pieces of picture data between a playback start position and a playback stop position in the set of video content, and places thumbnails of these pieces of picture data on the GUI screen.

### Summary of the Invention

The invention is a method according to claim 1, a computer program according to claim 8, and a system according to claim 9. In this manner, an interactive media guidance application with enhanced index point management support is provided. In connection with the enhanced index point management support, users may establish personal index points into a media asset or content selection. As used herein, a media asset or content selection refers to any media content capable of being indexed by a user's equipment. Examples of commonly indexed assets include recorded content (e.g., content recorded to a digital video recorder (DVR) or other storage device), on-demand content (e.g., video on-demand (VOD) content), pay-per-view content, DVD content, and digital music. In addition, indexed assets may include playlists, or ordered lists of content. Systems and methods for providing playlists of media content are described in more detail in Radloff U.S. Patent Application No. 11/324,191, filed December 29, 2005 and Radloff et al. U.S. Patent No. 11/366,863, filed March 2, 2006, both of which are hereby incorporated by reference herein in their entireties.

After a user equipment device receives a request to view a media asset, the interactive media guidance application may access a list of available index points associated with the requested asset. Each index point in the list of available index points may reference a current viewing location within the asset. The interactive media guidance application may then present a listing of the available index points to the user. To access the requested asset, the user may select one of the available index points or create a new index point.

In some embodiments, the current viewing location within an asset is represented by the viewing time from the start of the asset. For example, an index point may reference a current viewing location of 0 hours, 28 minutes, and 13 seconds (00:28:13) from the start of the asset. Other representations may also be used. For example, for playlists of assets, an asset number and a current viewing location within that particular asset may be referenced by the index point. Alternatively, the total elapsed time from the beginning on the playlist may be references by the index point. In other embodiments, frame numbers, user application state data, or any other suitable information may be referenced by an index point to keep track of a user's viewing progress or current location within the asset. After a user accesses an asset using an index point, the index point is updated as the user progresses through the asset.

In some embodiments, a user may associate a custom identifier with an index point. For example, the user may associate the user's name, handle or nickname, or a brief descriptive label with the index point to help identify the index point for later access. The interactive media guidance application is configured to display index point identifiers in an index point listing screen in accordance with some embodiments of the invention.

Index points may be maintained for each user of the system, each user equipment device, or both. In addition, a default index point may be defined for each user may additionally or alternatively access an asset at the location referenced by the default index point. In some embodiments, the default index point is used after a timeout period expires and no user selection of a custom index point has been received.

To further help identify an index point, cached video of the asset around the current index point may be presented in a visual index point listing screen in some embodiments. This cached video may correspond to a portion of video (e.g., a loop or just a single frame) before the viewing location referenced by the index point, a portion of pre-decoded video after the viewing location referenced by the index point, or both a portion of video before and after the location referenced by the index point. The video may be continuously looped and presented to the user to help remind the user of the location associated with the index point.

After a user accesses an asset using an index point, the user's viewing progress is monitored and the index point is updated accordingly. In some embodiments, index points are continuously updated (or periodically updated, e.g., every 5 seconds) as the user progresses through an asset. In other embodiments, index points are updated only after the user stops, pauses, or otherwise tunes away from the asset (e.g., to watch another asset). The user may then access an index point again at a later time to resume the asset at the new location referenced by the index point.

### Brief Description of the Drawings

The above and other features of the present invention, its nature and various advantages will be more apparent upon consideration of the following detailed description, taken in conjunction with the accompanying drawings, and in which:
FIG. 1 is a diagram of an illustrative interactive media system in accordance with one embodiment of the present invention;
FIG. 2 is a diagram of an illustrative multi-user or multi-room media system in accordance with one embodiment of the present invention;
FIGS. 3A and 3B show illustrative index point timelines and windows in accordance with one embodiment of the present invention;
FIG. 4 shows an illustrative index point record for a particular asset in accordance with one embodiment of the present invention;
FIGS. 5-12 show illustrative index point management display screens in accordance with various embodiments of the present invention;
FIG. 13 shows an illustrative process for accessing a media asset in accordance with one embodiment of the present invention;
FIG. 14 shows an illustrative process for presenting cached video around an index point in accordance with one embodiment of the present invention; and
FIGS 15A and 15B show an illustrative process for requesting an index point from any user device in a media system in accordance with one embodiment of the present invention.

### Detailed Description of the Preferred Embodiments

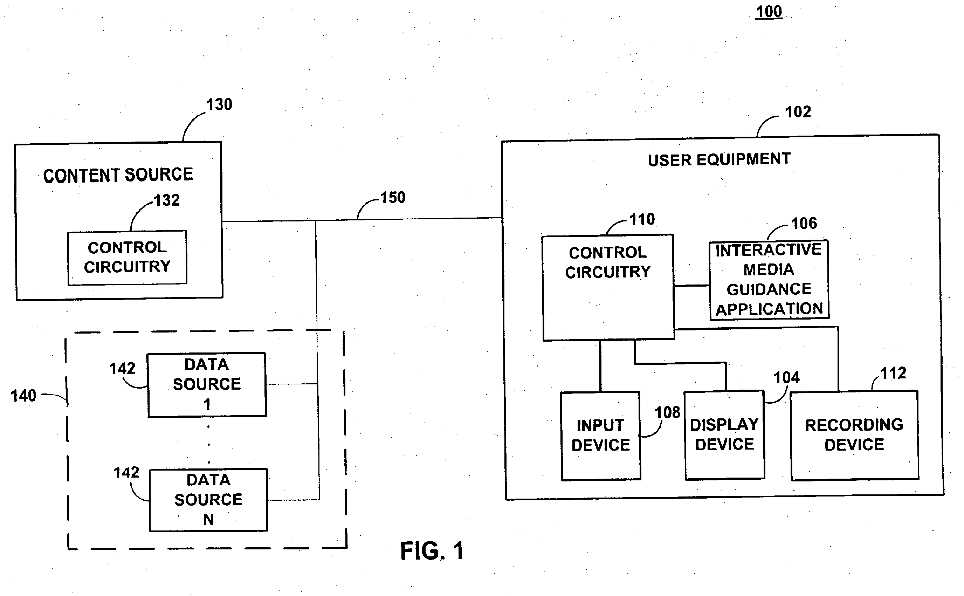

FIG. 1 shows illustrative interactive media system 100 in accordance with one embodiment of the invention. User equipment 102 receives content in the form of signals from content source 130 over communications path 150. Any suitable number of users may have user equipment, such as user equipment 102, coupled to content source 130 and data sources 140. For the clarity of the figure, however, the user equipment of only a single user is shown. In addition, although in practice there may be numerous instances of content source 130, for clarity only one instance has been shown in FIG. 1.

Content source 130 may be any suitable content source such as, for example, a cable system headend, satellite television distribution facility, television broadcast facility, on-demand server (e.g., video-on-demand ("VOD") server), Internet or network media/web server, or any other suitable facility or system for originating or distributing passive or interactive media content to user equipment 102. Media content that may be provided by content source 130 to user equipment 102 includes broadcast programs, broadcast series, VOD programs, digital music, news, interactive applications (e.g., interactive games), Internet resources and web services (e.g., websites, newsgroups, and chat rooms), and any other media content capable of being displayed by, presented to, recorded, or interacted with, using user equipment 102.

Content source 130 may be configured to transmit signals to user equipment 102 over any suitable communications path 150 including, for path, or any other suitable wired or wireless path. Although in the example of FIG. 1 only communications path 150 is shown, in actualimplementations, numerous communications paths may connect user equipment 102 and content source 130. The signals may be transmitted as a broadcast, multicast, unicast, or any other suitable transmission stream. Content source 130 may also include control circuitry 132 for performing operations on the signals transmitted by the content source such as, for example, generating new signals or communicating with user equipment 102 to provide on-demand content.

User equipment 102 may receive interactive application data from one or more instances of data sources 140 and/or content source 130. Data sources 140 may provide data for a particular type of content or for a particular application running on user equipment 102. For example, one data source 142 may provide data for an interactive media guidance application and another data source 142 may provide data for an interactive home shopping application, for example. In some embodiments, data sources 140 may provide data to the applications running on user equipment 102 using a client-server model. There may be one server per data source, one server for all sources, or, in some embodiments, a single server may communicate as a proxy between user equipment 102 and various data sources 140.

Content source 130 and data sources 140 are shown in FIG. 1 as separate elements. In practice, their functionality may be combined into a single mechanism and provided from a single system at a single multiple systems at multiple facilities. For example, content source 130 and data source 142 may be combined to provide broadcast television content and associated broadcast television data, including ratings information, program data, or other suitable information to user equipment 102.

User equipment 102 may include any equipment suitable for providing an interactive media experience. For example, user equipment 102 may include computer equipment, such as a personal computer with a television card (PCTV). User equipment 102 may also include television equipment such as a television and set-top box, a recording device, a video player, a user input device (e.g., remote control, a keyboard, a mouse, a touch pad, a touch screen, and/or a voice recognition/verification module) or any other device suitable for providing a complete, interactive experience. For example, user equipment 102 may include a DCT 2000, 2500, 5100, 6208 or 6412 set-top box provided by Motorola, Inc. User equipment 102 may also include various mobile communications devices with integrated or attached displays, such as PDAs, laptop computers, cellular telephones, and the like.

In the example of FIG. 1, user equipment 102 includes at least control circuitry 110, display device 104, interactive media guidance application 106, recording device 112, and user input device 108, all of which may be implemented as separate devices or as a single, integrated device. In addition to interactive media guidance application 106, other interactive applications may be implemented on user equipment 102. These interactive applications may display device 104, the content transmitted by content source 130 over communications path 150 and to provide interactive application features.

Display device 104 may be any suitable device capable of presenting human-perceivable media, such as, for example, a television monitor, computer monitor, LCD or plasma display, video projection device, holographic projector, virtual reality simulator, etc. Display device 104 may also be configured to provide audio and other sensory output.

Control circuitry 110 is adapted to receive user input from input device 108, execute the instructions of interactive media guidance application 106, execute the instructions of any other interactive applications, and direct display device 104 to display media content and interactive application display screens and overlays. Control circuitry 110 may include one or more tuners (e.g., analog or digital tuners), encoders and decoders (e.g., MPEG encoders and decoders), processors (e.g., Motorola or MIPS family processors), memory (i.e., RAM and hard disks), communications circuitry (e.g., cable modem and ATSC 256QAM receiver circuitry), input/output circuitry (e.g., graphics circuitry), connections to the various devices of user equipment 102 (e.g., recording device 112), and any other suitable components for providing analog or digital media content, including television programming, interactive media applications and games, digital music, and other interactive features. Control circuitry 110 may be configured to execute the instructions of interactive media guidance application 106 from memory, which can include any type of storage memory, hard disks, and/or optical drives). In one embodiment, control circuitry 110 may be included as part of one of the devices of user equipment 102 such as, for example, part of display 104 or any other device (e.g., a set-top box, television, and/or video player).

Control circuitry 110 may also be connected to recording device 112 for storing data and assets from data sources 140 or content source 130. Recording device 112 may include any media storage or recording device, including a digital video recorder (DVR), file system, or gaming system. The data and assets stored on recording device 112 may include data for use by interactive media guidance application 106 (e.g., media content information, index point information, or any other suitable information) as well as any media content accessible by user equipment 102.

Although, in the illustrated embodiment of FIG. 1, interactive media guidance application 106 is internal to user equipment 102, interactive media guidance application 106 may be implemented externally or partially implemented externally to user equipment 102. For example, interactive media guidance application 106 may be implemented at content source 130 and may run using a client-server or distributed architecture where some of the application is implemented locally on user equipment 102 in the form of a client process and some of the application is implemented at a remote location in the form of a server process. Interactive media guidance application 106 may also be implemented on any suitable server, computer equipment, or set-top box accessible interactive media guidance application 106 is integrated with another interactive application or is implemented as a standalone application, subprocess, or class (e.g., in an OCAP environment).

In at least some embodiments, interactive media guidance application 106 is implemented in software. However, an implementation of software and/or hardware may be used in other embodiments. These arrangements are merely illustrative. Other suitable techniques for implementing interactive media guidance application 106 may be used if desired.

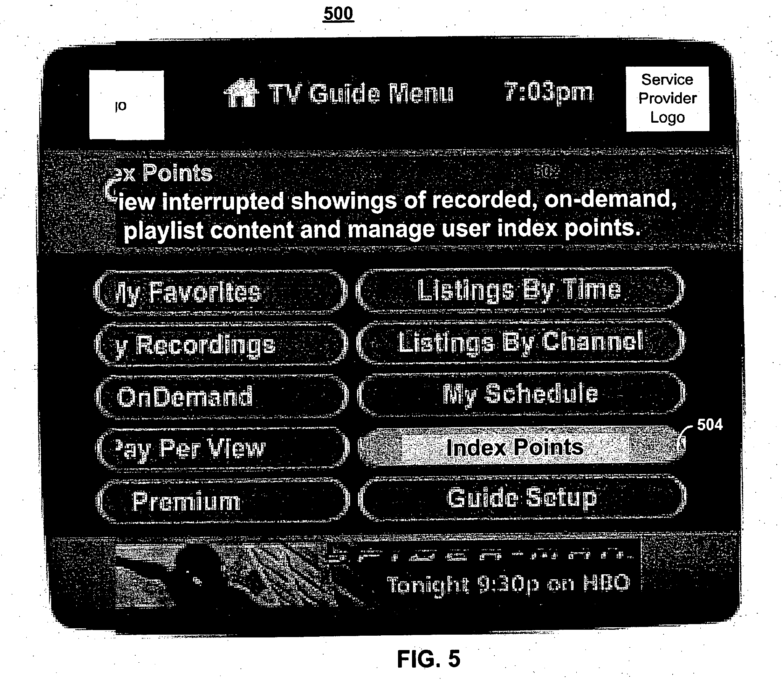

Interactive media guidance application 106 may store and maintain index points for users of user equipment 102. Interactive media guidance application 106 may also display, on display device 104, various index point management display screens and overlays, such as the display screens and overlays shown in FIGS. 5-12. User index point information may be stored and maintained at user equipment 102 (e.g., in a database in memory 112) or at a suitable content or data source (e.g., data source 142) in media system 100. If index points are stored remote from user equipment 102, the index point information may be retrieved on-demand or periodically from a remote location. For example, when user equipment 102 receives a user request for an indexed asset, user equipment 102 may request a listing of all available index points for the requested asset from a remote server or data source. In some embodiments, index points may be shared by users at diverse locations (e.g., after a user login or authentication process) or index points may be accessed only by the user equipment device, home network, or user that created the index points.

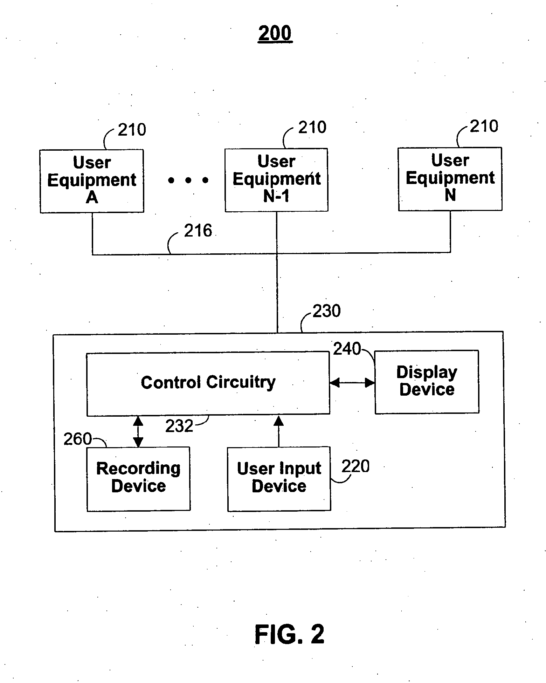

In some embodiments, a local media server is co-located with one or more user equipment devices. For example, FIG. 2 shows illustrative multi-user or multi-room system 200 in accordance with one embodiment of the invention. System 200 may be located at a single location or facility (e.g., a user's home) or multiple locations or facilities (e.g., a user's primary residence, secondary residence, and summer home). System 200 may include N instances of user equipment devices 210, where N is any positive number. User equipment devices 210 may include all the components, features, and network connections described in respect to user equipment 102 (FIG. 1).

User equipment devices 210 may be connected to local media sever 230 via communications path 216. Communications path 216 may include a satellite path (with telephone backlink), a fiber-optic path, a cable path, an Ethernet network, a DOCSIS cable modem network, or any other suitable wired or wireless path or network. Some very relevant specific communications networks include the Internet Protocol over cable/coax networks including the one specified by the Multimedia Over Coax Alliance (MOCA) (http://www.mocalliance.org), as well as applications and services that run on such networks including those specified by the Digital Living Network Alliance (http://www.dlna.org). User equipment devices 210 may also be connected to one another via the same communications path or a different path. For example, user equipment devices 210 may be connected to local media server 230 via a cable path while the user equipment devices may be connected to one another via fiber-optic paths.

Local media server 230 may include any media server, content aggregator, or user equipment device capable of recording assets and accessing stored assets. For example, local media server. 230 may include an Explorer 8300 DVR server by Scientific Atlanta or a DCT 6400 series high-definition networked set-top box as part of Motorola's Whole Home Media Solutions (WHMS) or a personal computer (e.g., equipped with a tuner card or Open Cable Unidiretional Receiver (OCUR) card and optionally running MediaCenter software from Microsoft Corporation of Redmond, WA). If local media server 230 is a set-top box, it may be configured as the master set-top box in a master/slave arrangement. For example, in some embodiments, user equipment devices 210 may not have direct access to recorded assets, but rather must retrieve recorded assets on recording device 260 through local media server 230. In this arrangement, local media server 230 processes asset requests on behalf of user equipment devices 210.

Local media server 230 may include at least control circuitry 232, display device 240, recording device 260, and user input device 220. Local media servers may often be without displays, for example, when they serve as network black box storage devices. Local media server 230 may also include audio and/or video encoding or transcoding circuitry (not shown) in order to convert media content from one format and/or asset type to another and/or asset type. Control circuitry 232, like control circuitry 110 (FIG. 1), may applications, such as an interactive media guidance application. In some embodiments, control circuitry 232 executes application instructions from memory (e.g., RAM, ROM, and hybrid types of memory). Local media server 230 may also include one or more attached or integrated recording or storage devices, such as recording device 260. Recording device 260 may include one or more digital video recorders, hard drives, optical drives, media players, gaming systems, or any other suitable device for recording or storing media assets. Media server 230 may be a PCTV running Microsoft's Media Center Edition (MCE) software, for example, and, in such an example, one or more of user equipment devices 210 may be an XBOX 360 game machine (also a product of Microsoft Corporation). Some or all of the media assets stored on recording device 260 may be capable of being indexed. For example, recording device 260 may include a plurality of recorded television programs, feature movies, and interactive applications and games accessible by user equipment devices 210 upon request.

Assets may also be accessed and cached to local media server 230 from a remote media server. For example, after a user equipment device requests an on-demand or pay-per-view asset from a remote on-demand or pay-per-view server, local media server 230 may cache a portion or all of the requested asset. An index point may then be assigned to the asset. As the user watches the asset, local media server 230 may monitor the user's progress through the requested asset and advance the index point accordingly in order to track the user's viewing progress. Likewise, the index point may restarts, or otherwise interacts with the presentation of the asset. In the case of game assets, index points may correspond to a level and/or location within the game and other game attributes (e.g., player health, weapons, kills, score, and rank).

In some embodiments, user equipment devices 210 may have different capabilities. For example, the user equipment devices may be configured to display different types of content and run different types of software on different platforms. For example, user equipment devices 210 may include set-top boxes, media servers, personal computers, and various mobile communications devices, such as cellular telephones and PDAs. Each user equipment device may have a different bandwidth capability for receiving data. For example, a wireless user equipment device may receive data from local media server 230 at a lower data rate than a user equipment device connected to local media server 230 via a wired (e.g., cable) path. In addition, a wireless device may not be configured to display high-definition content, while other user equipment device may have high-definition display support.

To support index point management and access from any user equipment device in systems 200 of FIG. 2 or 100 (FIG. 1), multiple formats of a single asset may be available. For example, a high-definition, standard-definition, and H.264 format of a particular asset may all be available on recording device 260 or content source 130 (FIG. 1). Depending on the capabilities of the requesting user equipment device, the appropriate version of the asset may be automatically accessed after an index point is not change across different asset formats (e.g., a high-definition and a standard-definition asset), the index point management system may update index points. in a similar fashion as the user progresses through any format of the asset associated with the index point.

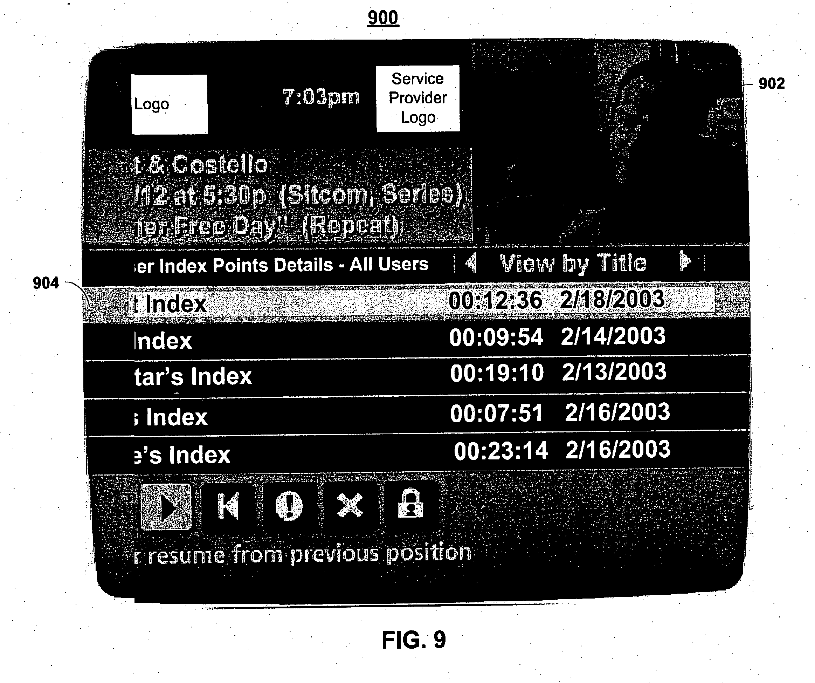

In some embodiments, user equipment devices 210 cache a short video clip (or one or more individual frames) of requested assets around each index point. For example, when a user stops or pauses the presentation of an asset, the user equipment device may cache the previous 15 seconds of video before the index stop point. The user equipment device may also predecode and cache content after the index stop point. In some embodiments, a portion of video before and a portion of video after the index stop point are both cached. This video is then associated with the index point. A user may view the cached video in an index point listing screen (such as display screen 900 of FIG. 9) to help remind the user what position in the asset the index point references.

A user may interact with local media server 230 using user input device 220. User input device 220 may include, for example, a remote control, a keyboard, a mouse, a touch pad, a touch screen, and/or a voice recognition/verification module. User input device 220 may be connected to control circuitry 232 over any suitable communications path, which may include a FireWire (IEEE 1394), infrared, or optical connection. Using user input device 220, a user may instruct control circuitry 232 to display interactive application screens, overlays, and media assets on display device 240. Additionally or alternatively, 210, a user may cause application screens, overlays, and media assets generated on media server 230 or locally on user equipment device 210 to be displayed local to user equipment device 210.

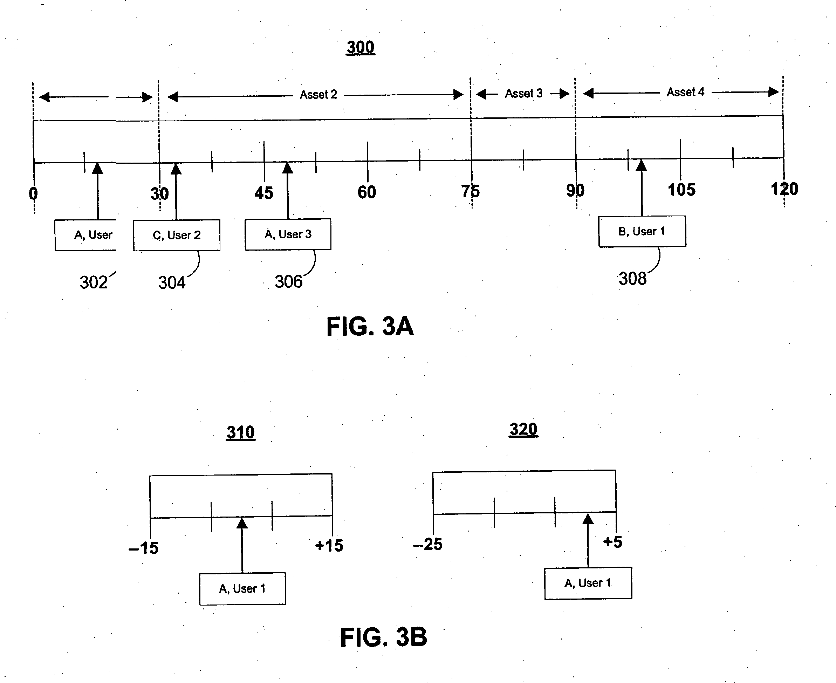

FIGS. 3A and 3B show illustrative index point timelines in accordance with one embodiment of the invention. Timeline 300 shows several user index points 302, 304, 306, and 308 in a playlist. The playlist defines four assets to be presented, displayed, or accessed in the order established by the playlist. The playlist may include homogenous or heterogeneous types of content, including, for example, broadcast television programs, digital music, recorded content, on-demand content, and interactive applications and games. In the example of FIG. 3A, asset 1 has a duration of 30 minutes, asset 2 has a duration of 45 minutes, asset 3 has a duration of 15 minutes, and asset 4 has a duration of 30 minutes. Each of assets 1 through 4 will be presented, displayed, or accessed for the designated time period. Typically this time period corresponds to the length of the asset, but this is not always the case. For example, some assets (e.g., a game or web access session) included in a playlist may not be associated with a duration or asset length. For these assets, the user may specify the asset's access or presentation duration in the playlist or the system may automatically provide a default duration (e.g., 30 minutes).

Although timeline 300 shows a playlist timeline with individual asset demarcations, the index points associated with a playlist may or may not playlist. For example, index point 306 may be represented by the appropriate asset number (i.e., 2 in the example of FIG. 3A) and the amount of elapsed time within that asset. Additionally or alternatively, index point 306 may be represented by the total elapsed time from the start of the playlist. For example, if index point 306 is 18 minutes and 21 seconds into asset 2, index point 306 may be represented by the asset number in the playlist followed by the elapsed time within that asset (e.g., "2 - 00:18:21"), the total elapsed time in the playlist (e.g., "00:48:21"), or by both (e.g., "00:48:21, 2 - 00:18:21").

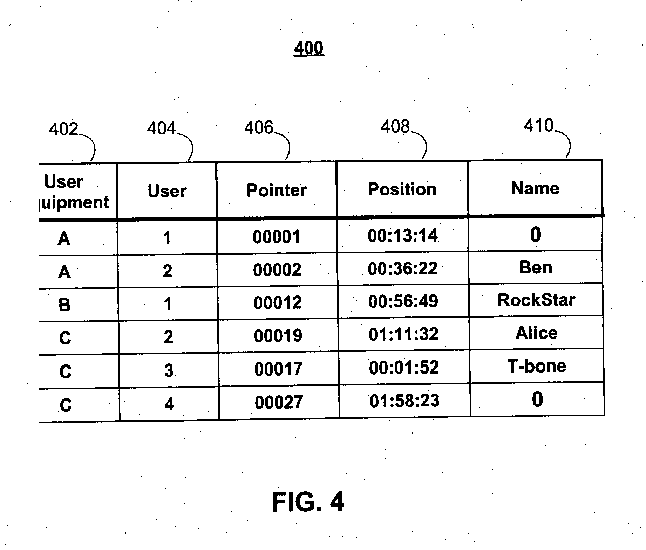

Although only four index points are shown in FIG. 3A, any number of index points for any number of users may be maintained for a single asset. As described in more detail with regard to FIG. 4, below, index points may be associated with a particular user, a particular user equipment device, or both. For example, in FIG. 3A user equipment device "A" has two user index points in playlist timeline 300 (i.e., index points 302 and 306). Although FIG. 3A shows an index point timeline associated with a playlist of four assets, any number of assets may be defined in a playlist. Moreover, a plurality of index points may be associated with individual assets (as opposed to playlists of assets).

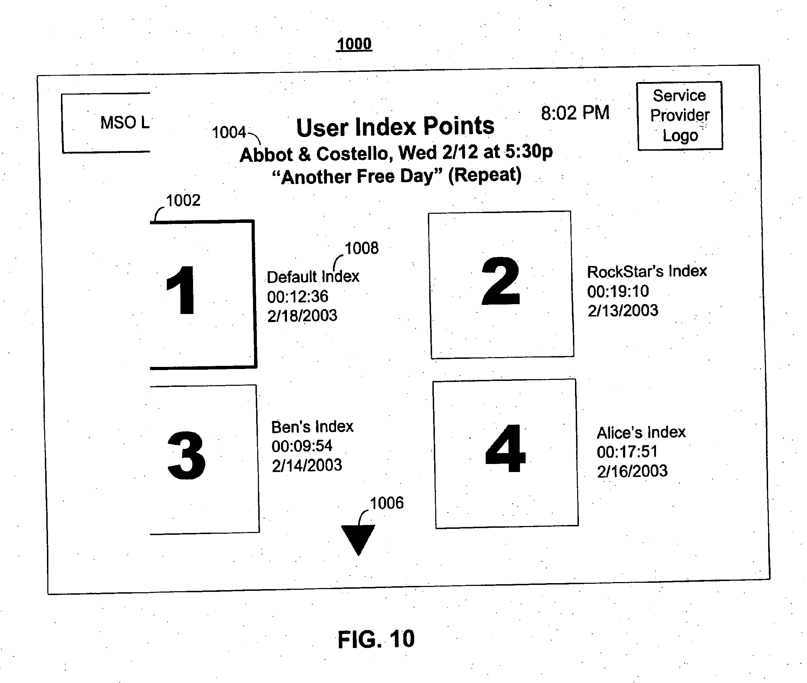

As mentioned above, at least a portion of video (or one or more frames) may be cached (and optionally compressed and/or encrypted) around each index point after a user stops, pauses, or otherwise tunes away from an asset associated with an index point. This video may then be presented to the user in screen 900 of FIG. 9 or display screen 1000 of FIG. 10) to help remind the user what position in the asset the index point references. To facilitate the display of a portion of video (or one or more frames) with an index point listing, the user equipment, local media server, or other suitable storage device, in some embodiments, may maintain one or more of sliding video cache window 310 and incremental video cache window 320, as shown in FIG. 3B. In some embodiments, an asset is pre-decoded continuously as it is played back. For example, sliding window 310 includes a 15-minute pre-decoded portion of video yet to be viewed and a 15-minute cached portion of already-presented video. The user index point may remain centered in the sliding window. Video behind the sliding window may be discarded (or cached until a low storage space condition requires the video to be discarded). The size of window 310 may be any suitable size and may be dynamically adjusted on-the-fly as warranted by storage space conditions on the user equipment or local media server.

Video segments may be cached on an incremental basis as well. For example, incremental video cache window 320 may access and decode video in 30-minute segments (or any other suitable segment size). A segment of new video may be accessed and decoded only when the user's index point is at the end (or some pre-determined distance from the end) of incremental video cache window 320. Incremental decoding and caching may yield better performance on some systems depending on such factors as the type of asset, the type of encoding, compression, and/or encryption used, and system processing power.

FIG. 4 shows index point record 400 for an illustrative asset. Each asset may have a plurality of index points associated with the asset. In the example of record 400, index points are represented by rows in a table of a relational database, but any suitable data structure or storage mechanism may be used in other embodiments. The record or other data structure may be stored at local media server 230 or on one or more of user equipment devices 210 (both of FIG. 2).

In some embodiments, index point records for recorded assets are stored on the same user equipment device, recording device, server, or other device that the actual recorded asset is stored on. For example, if local media server 230 (FIG. 2) holds all the recorded assets in system 200 (FIG. 2), then all index point records for recorded assets may all be stored at the local media server. In other embodiments, recorded assets may be stored at two or more devices within system 200 (FIG. 2). In these embodiments, an index point record may be located on the same device the asset associated with the record is stored on, or all index point records may be centrally stored on a single device. For example, if all the index point records are stored on local media server 230 (FIG. 2), local media server 230 (FIG. 2) may be responsible for monitoring content access and updating index point records.

Index point record 400 shows six index points for a particular asset. These six index points may represent all the index points available in system 200 (FIG. 2) for the particular asset. Each index point may be associated with a particular user equipment particular user, or both a user equipment device and a particular user. Index point record 400 includes user equipment device column 402, user column 404, index pointer column 406, index position column 408, and name column 410.

User equipment device column 402 includes an identification of the user equipment device that created (or last accessed) the index point. The identification of the user equipment device may take the form of a unique identifier, unit address, network address, or any other suitable identifier. In some embodiments, the user equipment device identified in user equipment column 402 may be the device the actual asset is stored on. In this way, other devices accessing the index point may know where to access the actual asset.

User column 404 includes an identification of the user that created (or last accessed) the index point. Users may be identified, for example, by name, login ID (e.g., username), or unique identifier. The identification of the user in column 404 may be unique across the user equipment device listed in user equipment column 402 or unique across all user equipment devices in system 200 (FIG. 2) or 100 (FIG. 1) .

Index pointer column 406 includes a reference or pointer to the index point. For example, as shown in FIG. 4, index pointer column 406 contains unique numeric identifiers. These identifiers may be used to uniquely reference a memory or storage location holding cached video, graphics, or frames for the particular asset. The pointer may also include a URL or other cached video or frames as well as an offset (e.g., timecode, frame number, memory reference) into that remote storage device. In some embodiments, index pointer column 406 is not included in index point record 400. In such embodiments, each index point may be uniquely identified by the combination of the user equipment identifier and the user identifier. This approach is viable in embodiments of the invention where each user may only create one index point per asset. In some embodiments, however, a single user may create multiple index points for a given asset, in which case the index pointer in record 400 may be helpful to uniquely identify the index point. An example of where multiple index points into an asset might be useful is where the asset is an exercise program (video or application) where an index into the abdominals workout is stored as well as an index into the thighs workout. These indices become in some ways, like bookmarks.

Index position column 408 includes the position (e.g., number of hours, minutes, and seconds) within the asset. The value in this column reflects the current viewing position associated with the index point. As described above, the current viewing position need not be represented by the elapsed time from the start of the asset (although this value may be preferably used for most assets). The current viewing position may also be given by frame number, or any other reference point that can be used to determine the current viewing position within the asset.

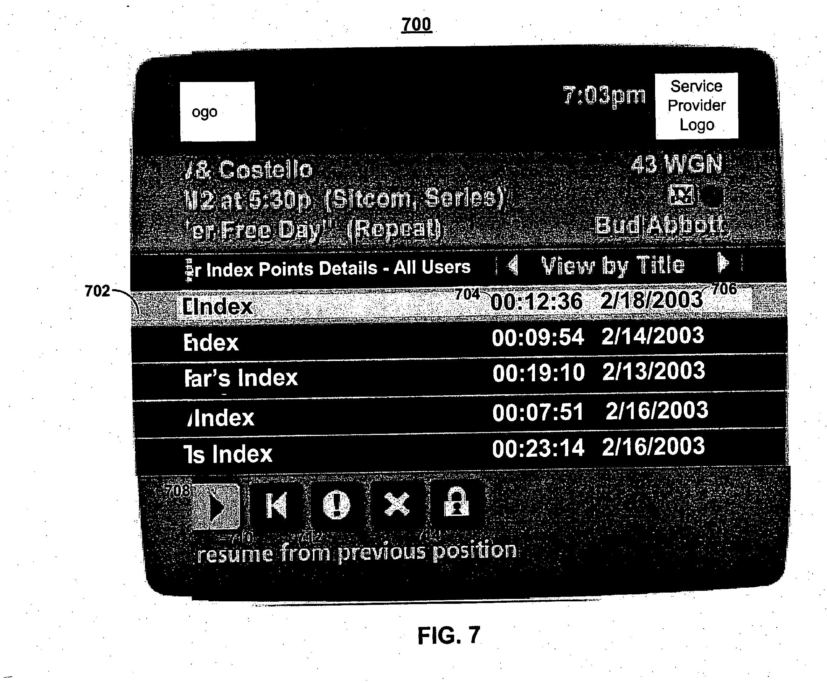

Finally, name column 410 includes a custom name, label, or short description created by the user index point. The name in name column 410 may be displayed in an index point listing display screen (such as display screen 700 of FIG. 7) to help identify the index point. In some embodiments, the information is name column 410 may be automatically populated by the media guidance application. For example, if an index point is created by a recognized user (e.g., a user who has logged into the system), the user's name (or nickname) may be the default name for the index point. The user may then edit the default name to associate any desirable custom name, label, or description with the index point. As described above, in some embodiments, the system may additionally maintain a default index point. Default index points may not be named and they may include a NULL, "0", or blank entry in name column 410.

In the example of FIG. 4, index point row 412 may correspond to a default index point for the asset associated with index point record 400. There may be one default index point per asset, one default index point per user equipment device, or multiple default index points per asset. Default index points may be used after a timeout period elapses and no user selection of an index point is received. Index point row 412 indicates that the index point was created (or last accessed) by user "1" at user equipment "A". The row also indicates that the viewing position associated with the index point is 0 hours, 13 minutes, and 14 seconds and that no custom name has been assigned to the index point. Index point row 414 corresponds to another index point for the asset. This index point was created (or last accessed) by user "1" at user this index point is 0 hours, 56 minutes, and 49 seconds, and the user has associated the custom label, name, or description "RockStar" with the index point.

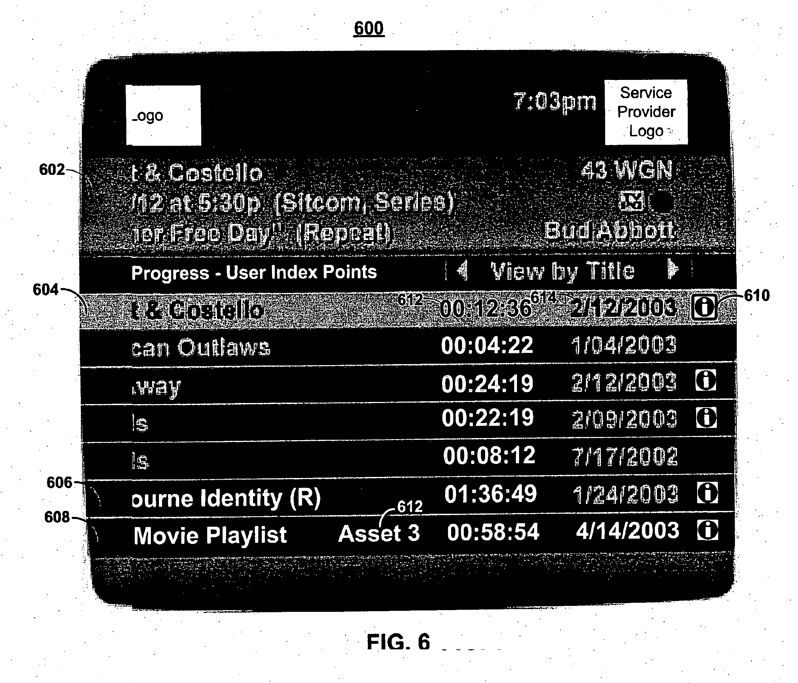

FIG. 5 shows illustrative interactive media guidance application menu display screen 500 in accordance with one embodiment of the invention. A user may be presented with menu display screen 500 after issuing a suitable command via input device 108 (FIG. 1) (e.g., pressing a "Guide" or "Menu" button on a remote control). Menu display screen 500 includes several user-selectable options, including index points option 504. A user may use input device 108 (FIG. 1) to move a highlight region or cursor about any user-selectable option presented in menu display screen 500. After index points option 504 is highlighted or selected, a description of the index points option may appear in details area 502. For example, details area 502 may inform the user that the user may access and manage user index points via selecting index points option 504. After selecting index points option 504, display screen 600 (FIG. 6) may be presented to the user.

FIG. 6 shows in progress display screen 600 in accordance with one embodiment of the invention. Display screen 600 includes a list of available assets with at least one associated index point. Display screen 600 may include listings for recorded episodes of a program series, such as listing 604, feature movies accessed via an on-demand or pay-per-view service, such as listings 606, and playlists, such as listing 608, as well as any other content capable of being indexed (e.g., interactive applications and current viewing position 612 and date 614. Date 614 may correspond to the date the index point was last accessed or, in the case of episodic content, the date the asset was broadcast. Details area 602 may present additional information about the selected index point, the asset, or any other suitable information. For playlist assets, the listing may also include an asset number within the playlist. For example, playlist listing 608 includes asset number 612. The current viewing position associated with playlists may correspond to the elapsed time within the asset or the elapsed time from the start of the playlist.

Since assets typically are associated with more than one index point, in some embodiments, the listings in display screen 600 correspond to the first or default index point for the particular asset. To indicate that an asset is associated with more than one index point, more information icon 610 may be presented in the asset listing. After selecting any listing in display screen 600 with more information icon 610, an index point details screen, such as index point details display screen 700 (FIG. 7), may be presented to the user. After selecting a listing without more information icon 610, the asset may be automatically presented to the user starting at the current viewing position displayed in the listing.

In some embodiments, the index point listings in display screen 600 are presented after a user logs into a user equipment device (e.g., using a username and password). Once logged in, the user may be presented only with the index points created by the user. In this way, the user may be presented with a user's own index points. The user may also establish permissions for other users to access or modify the user's index points, if desired. An authentication module (which may be part of the interactive media guidance application) may validate all login requests and enforce all index point permissions.

FIG. 7 shows illustrative index point details display screen 700 in accordance with one embodiment of the invention. Display screen 700 may list all the available index points associated with a particular asset. For example, after selecting listing 604 (FIG. 6), display screen 700 may be displayed to the user. Each index point listing in display screen 700, such as index point listing 702, may include the index point name, label, or description (if available), current viewing position 704, and date 706. Date 706 may indicate the date the index point was last accessed. The information displayed in display screen 700 may be derived from an index point data record, such as record 400 (FIG. 4).

To return to now playing display screen 600 (FIG. 6), the user may select back icon 708. To start viewing a selected asset at the current viewing location associated with an index point, the user may highlight an index point and select resume icon 710. To reset, or restart, an index point (e.g., back to 00:00:00), the user may select reset icon 712. To delete or remove an index point, the user may select delete icon 714. After resetting or deleting an index point, the interactive media guidance application may make the appropriate change to the index point record associated with the asset.

Although some common index point action icons are displayed in display screen 700, other icons associated with other index point actions may also be displayed. For example, a fast-forward or rewind action may be defined. After selecting the fast-forward or rewind action icons, the current viewing position associated with an index point may be altered accordingly. Icons for these additional actions may be displayed near action icons 708, 710, 712, and/or 714, if desired.

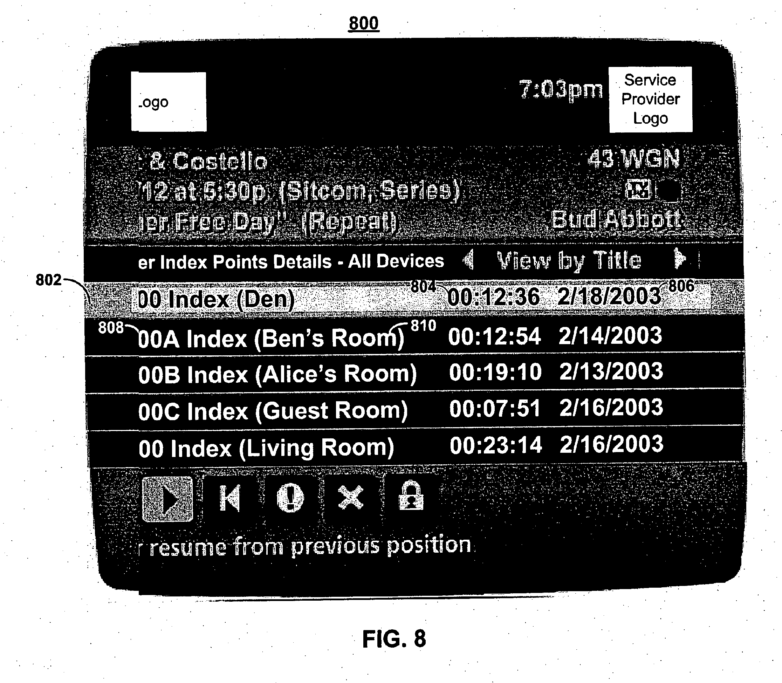

Index points for a particular asset may also be grouped by user equipment device in some embodiments. For example, FIG. 8 shows all devices index point listing display screen 800 in accordance with one embodiment of the invention. In this embodiment, each user equipment device in system 200 (FIG. 2) or system 100 (FIG. 1) may maintain its own index point for each asset. For example, listing 802 represents an index point for a Motorola DCT 5100 set-top box. This index point is associated with current viewing position 804 and date 806. Date 806 may represent the date the index point was last accessed. Any user in the multi-room media system may access an index point created at another user equipment device by accessing a centrally stored index point data record, such as data record 400 (FIG. 4). For example, a user may create an index point from one user equipment device and wish to access the index point from another user equipment device.

Each listing in display screen 800 may also include an identification of the user equipment device, such as label 808 and an identification of the location 810 (e.g., "Ben's Room"). The identifying labels may help a user identify the desired index point from which to resume accessing the asset. In some embodiments, user equipment label 808 and location label 810 may be automatically updated after a user accesses an index point from a new user equipment device. In this way, user equipment label 808 and location label 810 may always reflect the most recent user equipment device to access the index point. In other embodiments, labels 808 and 810 may correspond to the user equipment device that created the index point and may remain static regardless of which user equipment device last accessed the index point. Similar to display screen 700 (FIG. 7), display screen 800 may also include index point action icons below the index point listing area.

Sometimes, a user may not be able to identify which index point the user last accessed. This may be true despite presenting an index point name or descriptive label, a current viewing position indication, and a last access date in the index point listing. To further help identify an index point, a short video clip (e.g., a portion of the video cached using sliding video cache window 310 and/or incremental video cache window 320, both of FIG. 3) may be presented to the user after the user highlights or selects an index point listing in some embodiments. The video clip may include a portion of video around or near the current viewing location associated with the index point. For example, a 30-second video including 15 seconds before the current viewing position and 15 seconds after the current viewing position may be looped and presented to the user.

FIG. 9 shows illustrative display screen 900 with such a video window. Display screen 900, like display screen 700 (FIG. 7), may include a listing of all index points associated with a particular asset. After highlighting a listing for an index point, such as listing 904, video window 902 may present a looping video to the user to help identify the index point. After the user moves the cursor or highlight region to another listing for a different index point, the video presented in video window 902 may automatically change to a new video clip associated with the newly selected index point. The video clip may be of any suitable length and may continuously loop or repeat, if desired.

Although only one video window 902 is shown in the example of FIG. 9, it is to be clearly understood that a plurality of video windows, or cells, may be displayed as well. For example, display screen 900 could include a video mosaic screen with a plurality of video windows or cells presented simultaneously in a single display, as shown in display screen 1000 of FIG. 10. Each video window or cell, such as cell 1002, may correspond to a different index point associated with the asset identified in name area 1004. A user may select any video window or cell to access the asset at the viewing position corresponding to the selected video window. In some embodiments, detailed index point information is displayed along side or near each video window or cell. For example, detailed information 1008 may include the custom name or label associated with the index point, the current viewing position, and the date the index point was last accessed (or created). To view more video cells of index points associated with the content identified in name area 1004, the user may select more icon 1006.

Although only four video windows are shown in the example of FIG. 10, any suitable number of video windows may be presented simultaneously in a single display screen (e.g., 2, 6, 8, or 10 windows). Each video window may contain video around or near a different index point associated with the asset. For an example of systems and methods for supporting video mosaic displays and screens and video-rich navigation, see U.S. Patent Application Nos. 11/395,380, filed March 30, 2006, 11/510,247, filed August 24, 2006, and 11/510,363, filed August 24, 2006, all of which are hereby incorporated by reference herein in their entireties.

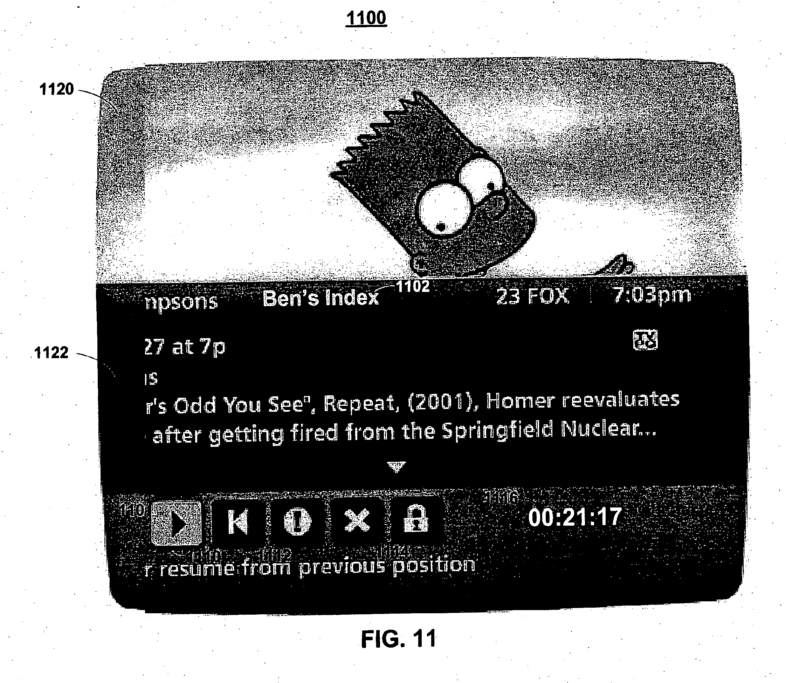

FIG. 11 shows illustrative more information display screen 1100 in accordance with one embodiment of the invention. While watching an indexed asset, the user may wish to view more information about the asset or the index point. For example, the user may press an "Info" button on a remote control to be presented with overlay 1122. While overlay 1122 is displayed, the asset in main window 1120 may be paused or may continue playing. Overlay 1122 may include the name of the asset, a description of the asset, rating information, channel information, and any other suitable information. In addition, more information overlay 1122 may include an indication of the index point name, such as name 1102, and an indication of the current viewing position associated with the index point, such as viewing position 1116. The user may perform common index point management function using icons 1108, 1110,

For example, to return to now playing display screen 600 (FIG. 6), the user may select back icon 1108. To resume viewing the asset, the user may select resume icon 1110. To reset, or restart, the index point (e.g., back to 00:00:00), the user may select reset icon 1112. To delete or remove the index point, the user may select delete icon 1114. After resetting or deleting an index point, the interactive media guidance application may make the appropriate change to the index point record (e.g., record 400 of FIG. 4) associated with the asset. As described above with regard to FIG 7, other action icons may also be provided (e.g., fast-forward or rewind).

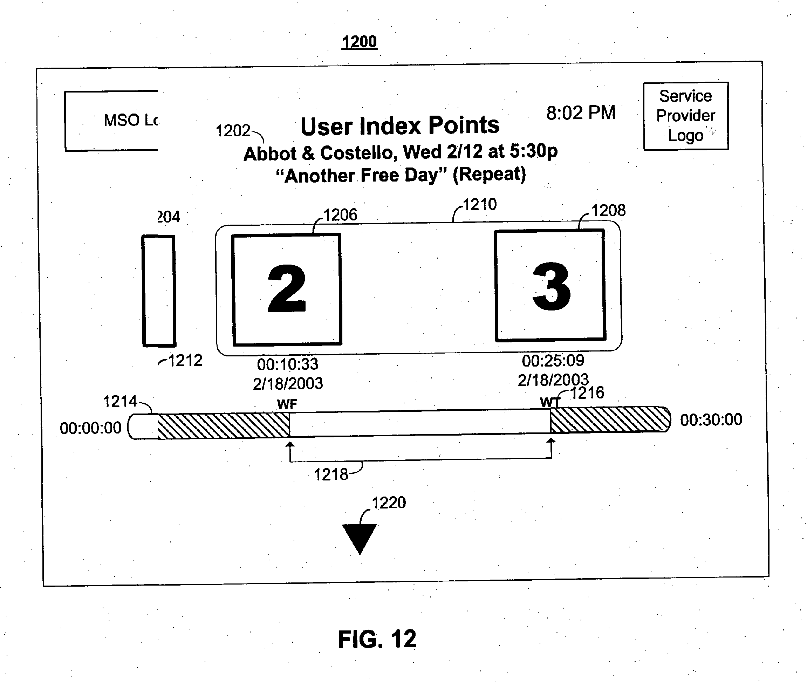

FIG. 12 shows illustrative display screen 1200 with index point pairings. The single index points discussed thus far have been "watched to" index points. In some embodiments, however, index points may be grouped in a "watched from" and "watched to" pairing. Display screen 1200 shows an example of an index point pairing display for the asset listed in title area 1202. For example, if a user watches an asset from its beginning to, for example, time 00:05:36 and then fast forwards the asset to a later time, the system may create an unpaired "watched to" index at 00:05:36. A video loop or one or more frames of video at or around this index point may be stored and presented in video cell 1204. If the user then stops fast-forwarding the asset and resumes normal speed playback at, for example, time 00:10:33, and then subsequently stops or pauses the asset at some later time (e.g., time 00:25:09), the system may create both a "watched from" index at the location where the user 00:10:33) as well as a "watched to" index indicating the location the user paused/stopped viewing (e.g., time 00:25:09). A video loop or one or more frames of video at or around these index points may also be stored and presented in video cells, such as cells 1206 and 1208.

In some embodiments, these "watched to" and "watched from" index points are indicated as paired in the graphical user interface (e.g., with graphical lines of linkage). For example, pair highlight 1210 may surround video cells 1206 and 1208 to indicate that these cells are paired. In addition, indicator 1218 may indicate that these two indices are paired in progress bar 1214. A user may navigate between index points and pairs of index points using input device 108 (FIG. 1). For example, the user may press the left or right arrow keys on a remote control device to select or highlight a different index point displayed in display screen 1200. A "resume from" function may be applicable to any of these indices to start viewing the asset at the appropriate location corresponding to the selected index. A single asset may have multiple such pairs of watched to and watched from indices, from a single user or from multiple users and/or multiple devices. Various rules would apply to the updating of these indices, depending on watching through or past them, based on various privilege levels, as can be appreciated by one skilled in the art.

In some of these embodiments, an asset is depicted graphically using a transport bar or progress bar, such as progress bar 1214. The watched to and from points as well as pairings may be overlaid on the progress, watched areas, and skipped areas of the asset. In addition markers (such as marker 1216) may appear above, below, or within the transport or progress bar. The markers may indicate the type of index point (e.g., "watched to" ("WT") or watched from or ("WF")). Paired markers may be displayed in the same color to distinguish them from unpaired markers. Above the transport bar, in some embodiments, a video loop or graphic corresponding to each index point may be displayed providing a visual indication of the scenes at or surrounding the index points. As show in the example of FIG. 12, cells 1204, 1206, and 1208 are positioned above their corresponding index points. Label 1212 may be associated with each cell and may indicate the viewing position and date viewed. In order to view more index point pairs associated with the asset listed in title area 1202, the user may select more icon 1220. In some embodiments, index pairs for multiple assets may be displayed in the same display screen.

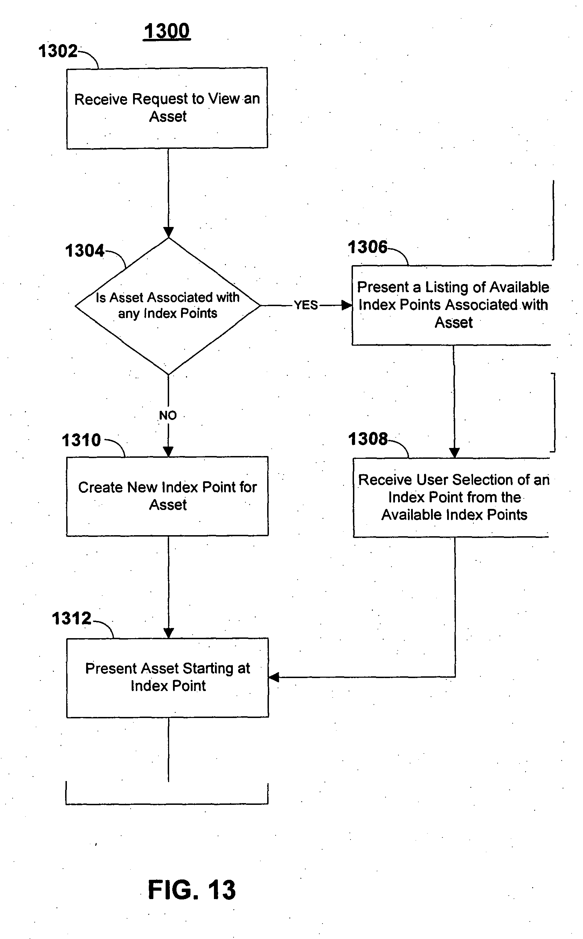

FIG. 13 shows illustrative process 1300 for accessing media content in according with one embodiment of the invention. At step 1302, a request is received to view an asset. For example, the user may press a suitable button or key on user input device 108 (FIG. 1) or 220 (FIG. 2) to request an asset. The user may also request a playlist of assets. At step 1304, the interactive media guidance application determines if there are any index points associated with the requested asset. For example, the media guidance application may determine (e.g., by querying a database) if an index point record, such as record 400 exist for the asset, a new index point may be created for the asset at step 1310. To create a new index point, a new record, similar to record 400 (FIG. 4), may be created for the asset and stored in an index point database or data source.

If the requested asset is associated with at least one index point, at step 1306 a listing of available index points may be presented to the user. For example, display screen 700 (FIG. 7) or display screen 800 (FIG. 8) may be displayed. After presenting a listing of available index points to the user, a user selection of one of the index points may be received at step 1308. The asset may then be presented on the user equipment at the selected index point's current viewing position at step 1312. If a new index point is created at step 1310, the asset may be presented from the beginning of the asset at step 1312. Finally, at step 1314, the media guidance application may monitor the user's progress through the asset and update the index point accordingly.

In practice, one or more steps shown in process 1300 may be combined with other steps, performed in any suitable order, performed in parallel (e.g., simultaneously or substantially simultaneously) or removed.

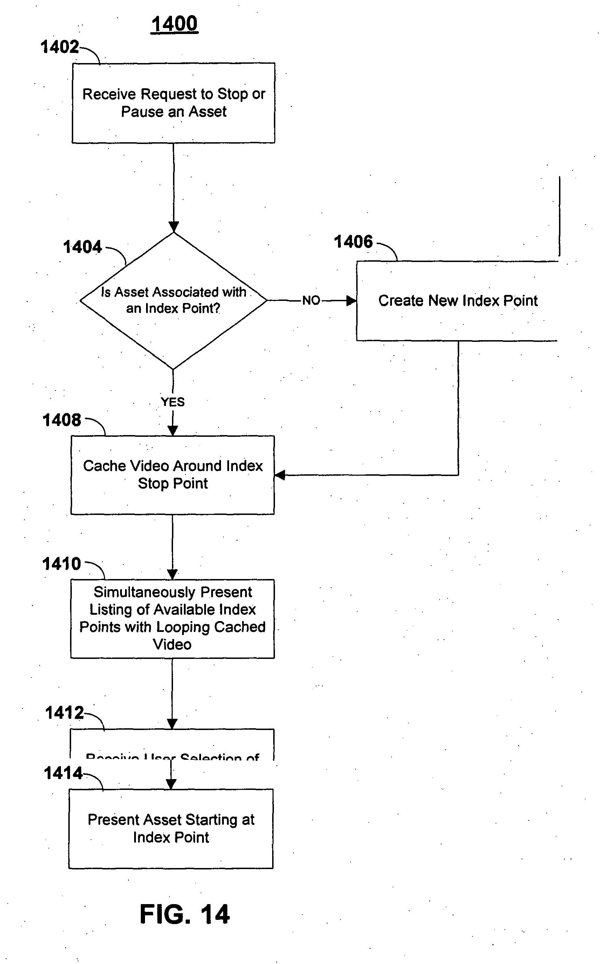

FIG. 14 shows illustrative process 1400 for updating an index point and caching a video of an asset at a location based on the index point. At step 1402, a request to stop or pause an asset is received. For example, a user may turn or tune away from an asset or return to an interactive media guidance application display screen (such as menu display screen 500 of FIG. asset, the interactive media guidance application may determine if the asset is associated with an index point at step 1404. For example, an index point database may be queried to determine if an index point record, such as record 400 (FIG. 4), exists for the asset. If an index point is not associated with the asset, a new index point may be created for the asset at step 1406. For example, a new record similar to record 400 (FIG. 4), may be created. The current viewing position associated with the index point may be the point in the asset that the user stopped or paused the asset.

After creating a new index point at step 1406 or if a determination is made that the asset is associated with an index point at step 1404, video of the asset may be cached at step 1408. For example, in some embodiments, a portion of video ahead of the current viewing position associated with the index point is pre-decoded and cached to the user equipment. In other embodiments, previously presented video behind the index point is cached to the user equipment, or a portion of video both ahead of the index point and behind the index point may be cached. In some embodiments, the video may already be cached to the user equipment as part of the regular asset decoding process. For example, sliding video cache window 310 and/or incremental video cache window 320 (both of FIG. 3) may be used in the asset decoding process.

Then, at step 1410, a listing of available index points is simultaneously presented to the user with at least a portion of the cached video. For example, display screen 900 (FIG. 9) shows video window with the selected index point listing. This video may help the user determine which index point the user last accessed without altering the actual viewing position of the index point. If the user wishes to resume the presentation of the asset, a user selection of an index point is received at step 1412, and the asset is presented at the selected index point at step 1414.

In practice, one or more steps shown in process 1400 may be combined with other steps, performed in any suitable order, performed in parallel (e.g., simultaneously or substantially simultaneously) or removed.

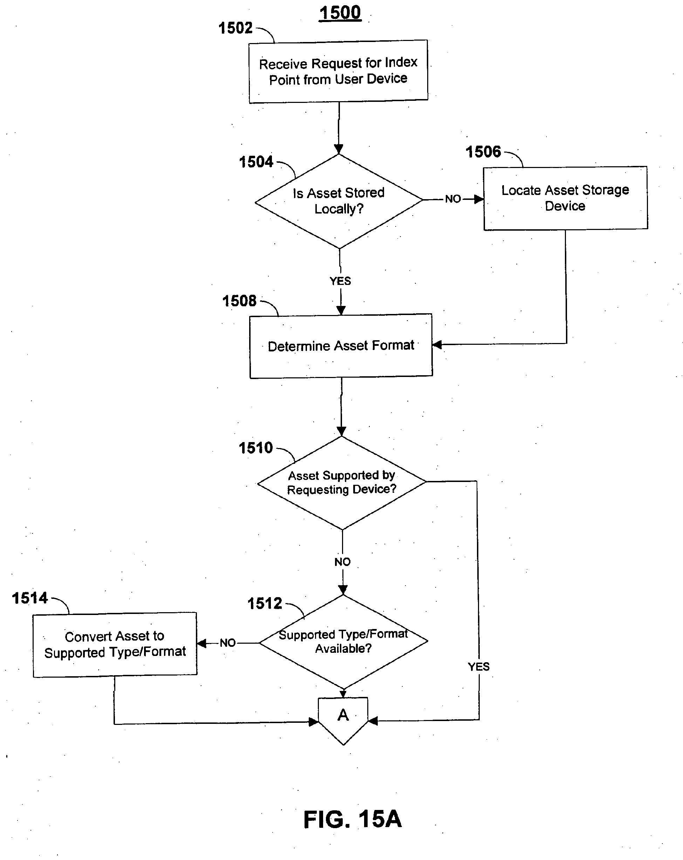

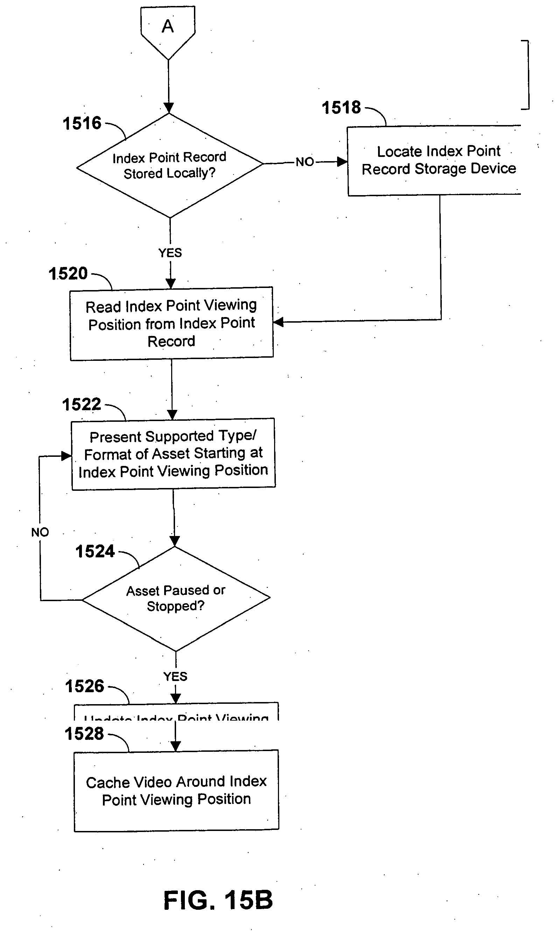

FIGS. 15A and 15B show illustrative process 1500 for requesting an index point from a user device. Because index points (and their associated assets) may be accessed from a variety of user devices (e.g., cellular telephones, set-top boxes, personal computers, and PDAs), in some embodiments, the index point management system attempts to locate a supported media format for display on the requesting device. At step 1502, a request may be received for an index point from a user device. For example, a user at one of user equipment devices 210 may select an index point from an index point listings screen, such as display screen 700 (FIG. 7). After receiving the user request for an index point, at step 1504 the location of the asset associated with the index point is determined. For example, user equipment column 402 of index point data record 400 (both of FIG. 4) may identify the source of the asset. The source of the asset may include a remote or local media server, a user equipment device, or any other storage location.

If the asset is not stored locally, at step 1506 the asset storage device is located; For example, the asset may be stored on a remote media server, such as an on-demand or pay-per-view server. After the asset storage device is located or after a determination is made that the asset is available locally, at step 1508 the asset format and/or the asset type may be determined. Asset types may include, for example, video, audio, interactive media, applications, games, and Internet content. Asset formats for video may include, for example, high-definition (HD) video, standard-definition (SD) video, and H.264 video.

At step 1510, the media guidance application may determine if the asset type and/or format associated with the requested index point is supported by the requesting device. For example, high-definition assets may not be supported by all devices. If the asset format and/or type is not supported, then at step 1512 the media guidance application may determine if a supported type and/or format of the asset is available. For example, one data source (e.g., data source 142 of FIG. 1) may provide high-definition content while another data source may provide standard-definition content. The interactive media guidance application may search the available data sources and recording devices for supported formats stored locally or available from a remote server.

If, at step 1512, a supported asset type or format is not available, conversion of an unsupported type or format may be attempted in some embodiments at step 1514. Local media server 230 (FIG. 2) or user equipment devices 210 (FIG. 2) may access encoding or for creating a supported format of the asset from an unsupported format. For example, if the requesting device is a cellular telephone capable of supporting only H.264 video and a particular bitrate, a high-definition or standard-definition format of the asset may be converted to a compatible H.264 version. After converting the asset to a supported version at step 1514, after a determination is made that a supported format of the asset is available at step 1512, or after a determination is made that the requested asset is supported by the requesting device at step 1510, illustrative process 1500 may continue in FIG. 15B.

At step 1516 in FIG. 15B, the requesting device may determine if the index point record is stored locally. For example, the requesting device may be one of user equipment devices 210 (FIG. 2) with an attached storage or recording device. If the index point record is stored locally, the index point viewing position is read at step 1520. For example, index point record 400 (FIG. 4) may be accessed, and the entry corresponding to the requested index point in position column 408 (FIG. 4) may be read. If the index point record is not stored locally (e.g., the index point information is centrally stored on a local or remote media server, such as media server 230 of FIG. 2), then, at step 1518, the index point record storage device may be located before accessing the index point record at step 1520.

After the current viewing position associated with the index point is read at step 1520, the asset may be presented starting from the current viewing position at step 1522. Although the term "viewing include positions within digital audio assets that are not viewed visually. For example, the elapsed time from the start of an audio clip may be recorded and used to present a digital audio asset at the position the user last terminated playback.

The asset may be presented until, at step 1524, the asset is paused, stopped, or otherwise tuned away from. In some embodiments, after the asset is paused, stopped, or otherwise tuned away from, the index point viewing position information is updated to reflect the new viewing position (i.e., the pause or stop point). In other embodiments, the viewing position associated with an index point is updated continuously or on a regular, periodic basis (e.g., every 5 seconds). To update the viewing position, a row in index point record 400 (FIG. 4) may be updated or changed. For example, one or more entries in position column 406 (FIG. 4) may be updated. Shared database access controls, such as mutex and semaphores, can be used to prevent dual access hazards that might occur in this environment, as would be understood to one skilled in the art.

At step 1528, video around or near the new index point viewing position may be cached. For example, a 15-second clip of looping video may be stored to the requesting device or a local media server (such as local media server 230 of FIG. 2). This video clip may then be presented in an index point listing screen or an index point listing video mosaic screen, such as display screen 900 (FIG. 9).

In practice, one or more steps shown in process 1500 may be combined with other steps, (e.g., simultaneously or substantially simultaneously) or removed.

The above described embodiments of the present invention are presented for purposes of illustration and not of limitation, and the present invention is limited only by the claims which follow.

## Claims

1. A method for accessing an asset in a playlist of assets which playlist includes a plurality of index points each indicative of a viewing progress position within the playlist, the method comprising:
displaying the plurality of index points;
receiving a user selection of one of the plurality of index points;
accessing the asset corresponding to the selected index point;
displaying the accessed asset at the viewing progress position for the selected index point;
updating the index point to reflect the user's progress through the displayed asset;
caching a portion of video of the accessed asset corresponding to the updated index point; and
presenting the cached portion of video simultaneously with a listing for the accessed asset.

2. The method of claim 1, further comprising receiving a first user selection of the displayed playlist of assets prior to receiving the user selection of one of the plurality of index points.

3. The method of claim 1 or 2, wherein caching a portion of video of the accessed asset comprises caching a portion of video before the updated viewing position.

4. The method of any of claims 1 to 3, wherein caching a portion of video of the asset comprises caching a portion of video after the updated viewing position.

5. The method of any of claims 1 to 4, wherein the cached portion of video is a looped video.

6. The method of any of claims 1 to 5, wherein the viewing position within the asset corresponds to an elapsed time from the start of the asset.

7. The method of any of claims 1 to 6, wherein each of the plurality of index points includes an asset number and an elapsed time within the asset in the playlist.

8. A computer program comprising computer-readable instructions which, when executed by one or more processors, cause the one or more processors to perform the method as claimed in any of the preceding claims.

9. A system for accessing an asset in a playlist of assets which playlist includes a plurality of index points each indicative of a viewing progress position within the playlist, the system comprising:
means for displaying the plurality of index points;
means for receiving a user selection of one of the plurality of index points;
means for accessing the asset corresponding to the selected index point;
means for displaying the accessed asset at the viewing progress position for the selected index point;
means for updating the index point to reflect the user's progress through the displayed asset;
means for caching a portion of video of the accessed asset corresponding to the updated index point; and
means for presenting the cached portion of video simultaneously with a listing for the accessed asset.

10. The system of claim 9, further comprising means for receiving a first user selection of the displayed playlist of assets prior to receiving the user selection of one of the index points.

11. The system of claim 9 or 10, wherein caching a portion of video of the asset comprises caching a portion of video before the updated viewing position.

12. The system of any of claims 9 to 11, wherein caching a portion of video of the asset comprises caching a portion of video after the updated viewing position.

13. The system of any of claims 9 to 12, wherein the cached portion of video is a looped video.

14. The system of any of claims 9 to 13, wherein the viewing position within the asset corresponds to an elapsed time from the start of the asset.

15. The system of any of claims 9 to 14, wherein each of the index points includes an asset number and an elapsed time within the asset in the playlist.

## Patentansprüche

1. Verfahren zum Zugreifen auf ein Asset in einer Wiedergabeliste von Assets, wobei die Wiedergabeliste eine Vielzahl von Indexpunkten beinhaltet, die jeweils eine Betrachtungsfortschrittsposition innerhalb der Wiedergabeliste angeben, wobei das Verfahren Folgendes umfasst:
Anzeigen der Vielzahl von Indexpunkten;
Empfangen einer Benutzerauswahl von einem der Vielzahl von Indexpunkten;
Zugreifen auf das Asset, das dem ausgewählten Indexpunkt entspricht;
Anzeigen des Assets, auf das zugegriffen wird, an der Betrachtungsfortschrittsposition für den ausgewählten Indexpunkt;
Aktualisieren des Indexpunkts, um den Fortschritt des Benutzers durch das angezeigte Asset widerzuspiegeln;
Zwischenspeichern eines Videoabschnitts des Assets, auf das zugegriffen wird, der dem aktualisierten Indexpunkt entspricht; und
gleichzeitiges Darstellen des zwischengespeicherten Videoabschnitts des Videos mit einer Auflistung für das Asset, auf das zugegriffen wird.

2. Verfahren nach Anspruch 1, das ferner Empfangen einer ersten Benutzerauswahl der angezeigten Wiedergabeliste von Assets vor dem Empfangen der Benutzerauswahl von einem der Vielzahl von Indexpunkten umfasst.

3. Verfahren nach Anspruch 1 oder 2, wobei das Zwischenspeichern eines Videoabschnitts des Assets, auf das zugegriffen wird, Zwischenspeichern eines Videoabschnitts vor der aktualisierten Betrachtungsposition umfasst.

4. Verfahren nach einem der Ansprüche 1 bis 3, wobei das Zwischenspeichern eines Videoabschnitts des Assets Zwischenspeichern eines Videoabschnitts nach der aktualisierten Betrachtungsposition umfasst.

5. Verfahren nach einem der Ansprüche 1 bis 4, wobei der zwischengespeicherte Videoabschnitt ein gelooptes Video ist.

6. Verfahren nach einem der Ansprüche 1 bis 5, wobei die Betrachtungsposition innerhalb des Assets einer seit dem Start des Assets verstrichenen Zeit entspricht.

7. Verfahren nach einem der Ansprüche 1 bis 6, wobei jeder der Vielzahl von Indexpunkten eine Assetnummer und eine verstrichene Zeit innerhalb des Assets in der Wiedergabeliste beinhaltet.

8. Computerprogramm, das computerlesbare Anweisungen umfasst, die bei Ausführung durch einen oder mehrere Prozessoren den einen oder die mehreren Prozessoren dazu veranlassen, das Verfahren nach einem der vorhergehenden Ansprüche durchzuführen.

9. System zum Zugreifen auf ein Asset in einer Wiedergabeliste von Assets, wobei die Wiedergabeliste eine Vielzahl von Indexpunkten beinhaltet, die jeweils eine Betrachtungsfortschrittsposition innerhalb der Wiedergabeliste angeben, wobei das System Folgendes umfasst:
Mittel zum Anzeigen der Vielzahl von Indexpunkten;
Mittel zum Empfangen einer Benutzerauswahl von einem der Vielzahl von Indexpunkten;
Mittel zum Zugreifen auf das Asset, das dem ausgewählten Indexpunkt entspricht;
Mittel zum Anzeigen des Assets, auf das zugegriffen wird, an der Betrachtungsfortschrittsposition für den ausgewählten Indexpunkt;
Mittel zum Aktualisieren des Indexpunkts, um den Fortschritt des Benutzers im angezeigten Asset widerzuspiegeln;
Mittel zum Zwischenspeichern eines Videoabschnitts des Assets, auf das zugegriffen wird, der dem aktualisierten Indexpunkt entspricht; und
Mittel zum gleichzeitigen Darstellen des zwischengespeicherten Videoabschnitts des Videos mit einer Auflistung für das Asset, auf das zugegriffen wird.

10. System nach Anspruch 9, das ferner Mittel zum Empfangen einer ersten Benutzerauswahl der angezeigten Wiedergabeliste von Assets vor Empfangen der Benutzerauswahl von einem der Indexpunkte umfasst.

11. System nach Anspruch 9 oder 10, wobei Zwischenspeichern eines Videoabschnitts des Assets Zwischenspeichern eines Videoabschnitts vor der aktualisierten Betrachtungsposition umfasst.

12. System nach einem der Ansprüche 9 bis 11, wobei Zwischenspeichern eines Videoabschnitts des Assets Zwischenspeichern eines Videoabschnitts nach der aktualisierten Betrachtungsposition umfasst.

13. System nach einem der Ansprüche 9 bis 12, wobei der zwischengespeicherte Videoabschnitt ein gelooptes Video ist.

14. System nach einem der Ansprüche 9 bis 13, wobei die Betrachtungsposition innerhalb des Assets einer seit dem Start des Assets verstrichenen Zeit entspricht.

15. System nach einem der Ansprüche 9 bis 14, wobei jeder der Indexpunkte eine Assetnummer und eine verstrichene Zeit innerhalb des Assets in der Wiedergabeliste beinhaltet.

## Revendications

1. Procédé pour accéder à un actif dans une liste de lecture d'actifs, laquelle liste de lecture comporte une pluralité de points-index indiquant chacun une position de progression de visualisation dans la liste de lecture, le procédé comprenant:
l'affichage de la pluralité de points-index;
la réception d'une sélection par l'utilisateur de l'un de la pluralité de points-index;
l'accès à l'actif correspondant au point-index sélectionné;
l'affichage de l'actif consulté à la position de progression de visualisation pour le point-index sélectionné;
la mise à jour du point-index pour refléter la progression de l'utilisateur à travers l'actif affiché;
la mise en cache d'une partie de vidéo de l'actif consulté correspondant au point-index mis à jour; et
la présentation de la partie de vidéo mise en cache simultanément avec une liste pour l'actif consulté.

2. Procédé selon la revendication 1, comprenant en outre la réception d'une première sélection par l'utilisateur de la liste de lecture d'actifs affichée avant de recevoir la sélection par l'utilisateur de l'un de la pluralité de points-index.

3. Procédé selon la revendication 1 ou 2, dans lequel la mise en cache d'une partie de vidéo de l'actif consulté comprend la mise en cache d'une partie de vidéo avant la position de visualisation mise à jour.

4. Procédé selon l'une quelconque des revendications 1 à 3, dans lequel la mise en cache d'une partie de vidéo de l'actif comprend la mise en cache d'une partie de vidéo après la position de visualisation mise à jour.

5. Procédé selon l'une quelconque des revendications 1 à 4, dans lequel la partie de vidéo mise en cache est une vidéo en boucle.

6. Procédé selon l'une quelconque des revendications 1 à 5, dans lequel la position de visualisation à l'intérieur de l'actif correspond à un temps écoulé depuis le début de l'actif.

7. Procédé selon l'une quelconque des revendications 1 à 6, dans lequel chacun de la pluralité de points-index comporte un numéro d'actif et un temps écoulé à l'intérieur de l'actif dans la liste de lecture.

8. Programme informatique comprenant des instructions lisibles par ordinateur qui, lorsqu'elles sont exécutées par un ou plusieurs processeurs, amènent les un ou plusieurs processeurs à mettre en œuvre le procédé selon l'une quelconque des revendications précédentes.

9. Système pour accéder à un actif dans une liste de lecture d'actifs, laquelle liste de lecture comporte une pluralité de points-index indiquant chacun une position de progression de visualisation dans la liste de lecture, le système comprenant:
un moyen d'affichage de la pluralité de points-index ;
un moyen de réception d'une sélection par l'utilisateur de l'un de la pluralité de points-index;
un moyen d'accès à l'actif correspondant au point-index sélectionné;
un moyen d'affichage de l'actif consulté à la position de progression de visualisation pour le point-index sélectionné ;
un moyen de mise à jour du point-index pour refléter la progression de l'utilisateur à travers l'actif affiché;
un moyen de mise en cache d'une partie de vidéo de l'actif consulté correspondant au point-index mis à jour ; et
un moyen de présentation de la partie de vidéo mise en cache simultanément avec une liste pour l'actif consulté.

10. Système selon la revendication 9, comprenant en outre un moyen de réception d'une première sélection par l'utilisateur de la liste de lecture d'actifs affichée avant de recevoir la sélection par l'utilisateur de l'un des points-index.

11. Système selon la revendication 9 ou 10, dans lequel la mise en cache d'une partie de vidéo de l'actif comprend la mise en cache d'une partie de vidéo avant la position de visualisation mise à jour.

12. Système selon l'une quelconque des revendications 9 à 11, dans lequel la mise en cache d'une partie de vidéo de l'actif comprend la mise en cache d'une partie de vidéo après la position de visualisation mise à jour.

13. Système selon l'une quelconque des revendications 9 à 12, dans lequel la partie de vidéo mise en cache est une vidéo en boucle.

14. Système selon l'une quelconque des revendications 9 à 13, dans lequel la position de visualisation à l'intérieur de l'actif correspond à un temps écoulé depuis le début de l'actif.

15. Système selon l'une quelconque des revendications 9 à 14, dans lequel chacun des points-index comporte un numéro d'actif et un temps écoulé à l'intérieur de l'actif dans la liste de lecture.
